## Europäisches Patentamt
## European Patent Office
## Office européen des brevets

(19)

(11) Publication number: **0 145 217**
**B1**

(12) **EUROPEAN PATENT SPECIFICATION**

(45) Date of publication of patent specification: **27.07.88**

(21) Application number: **84307446.9**

(22) Date of filing: **29.10.84**

(51) Int. Cl.⁴: **E 21 B 43/25, E 21 B 43/22, C 08 L 5/00**

(54) **Biopolymer composition having enhanced filterability.**

(30) Priority: **03.11.83 US 548473**

(43) Date of publication of application:
**19.06.85 Bulletin 85/25**

(45) Publication of the grant of the patent:
**27.07.88 Bulletin 88/30**

(84) Designated Contracting States:
**AT BE CH DE FR GB IT LI LU NL SE**

(56) References cited:
**EP-A-0 106 666**
**GB-A-1 587 225**
**US-A-3 300 375**
**US-A-3 996 378**

(73) Proprietor: **PFIZER INC.**
**235 East 42nd Street**
**New York, N.Y. 10017 (US)**

(72) Inventor: **Beck, Donald**
**312 Shewville Road**
**Ledyard Connecticut (US)**
Inventor: **Miller, James Walter**
**52 Nantucket Drive**
**Mystic Connecticut (US)**
Inventor: **Wernau, William Charles**
**58 Latham Street**
**Groton Connecticut (US)**
Inventor: **Young, Thomas Benton III**
**Box 151 A RR2**
**Stonington Connecticut (US)**

(74) Representative: **Moore, James William, Dr.**
**Pfizer Limited Ramsgate Road**
**Sandwich Kent CT13 9NJ (GB)**

Courier Press, Leamington Spa, England.

**Description**

Biopolymers, particularly those produced by members of the genus *Xanthomonas*, have found utility for the past several years in the field of enhanced oil recovery. The filterability of these materials is a key gauge of their injectivity; they must also pass readily through subterranean formations in order to aid in oil recovery.

It has been known for some years that methylene bis (thiocyanate) (MBT) is a potent biocide for a number of microorganisms. Wehner and Hinz (*Developments In Industrial Microbiology* vol. 21, 1980, p. 404—410) demonstrate its use against numerous species of bacteria and also against several algae. U.S. 3,300,375 (Wehner) teaches growth inhibition of sulfate reducing bacteria with MBT and suggests that MBT be added to water used in oil well flooding operations in order to kill subterranean sulfate reducing bacteria which plug wells. U.S. 3,996,378 (Payton) teaches a microbiocide composition made up of Xanthan gel and from 5—20% of MBT which is said to be less toxic than solvent based compositions for use in various industrial applications, such as in water treatment. G.B. 1587225 discloses addition of a biocide to water-based xanthomonas compositions in order to prolong shelf life of the composition by preventing growth of exogenous organisms.

Another characteristic of inorganic thiocyanates that has been noted is their ability to break up cells. For example, L. O. Ingram (*J. Bacteriol.* April 1981, p. 331—336) has investigated the chaotropic effect of sodium thiocyanate on *E. coli* and Hatefi and Hanstein (Proc. N.A.S. vol. 62 No. 10, 1969, p. 1129—1136) have investigated the more general effect of chaotropic agents, including thiocyanate anion on water solubility of membranes and particulate proteins.

We have now discovered that under certain conditions of pH and concentration MBT is effective in the lysis of the *Xanthomonas* organism and it can therefore be used to obtain a biopolymer composition for use in oil recovery having reduced solids content and thereby having enhanced filterability properties.

Thus the present invention comprises a composition for use in enhanced oil recovery comprising from 3.0—18 weight percent *Xanthomonas* biopolymer in the form of whole *Xanthomonas* fermentation broth or a concentrated *Xanthomonas* fermentation broth and from 0.0128—0.0512 weight percent methylene bis (thiocyanate), the composition having a pH above 5.0.

The composition is preferred wherein the biopolymer is in the form of whole *Xanthomonas* fermentation broth containing from 3.0—6 weight percent biopolymer, the broth being substantially free of insoluble matter having a particle size greater than about 3 microns.

Compositions which also contain from 300—5000 ppm formaldehyde are also preferred. The compositions are also preferred when they are prepared by subjecting them to a post-shearing step sufficient to cause a reduction in viscosity effectiveness of said biopolymer of from about 5—30%, preferably of from about 10—15 percent.

The present invention also comprises a process to produce a directly injectable *Xanthomonas* biopolymer solution comprising the steps of:

1) admixing a *Xanthomonas* biopolymer fermentation broth or concentrated fermentation broth containing from about 3.0—18 weight percent *Xanthomonas* biopolymer, with methylene bis (thiocyanate) to a concentration of methylene bis (thiocyanate) of from 0.0128—0.0512 weight percent in the admixture, said admixture having a pH above 5.0;

2) after a period of at least about 3 hours, admixing said admixture with from about 300—5000 ppm formaldehyde; and

3) diluting said second admixture to a concentration of about 100 to 4000 ppm biopolymer in a vigorous shear field.

The process is preferred wherein the biopolymer is in the form of whole *Xanthomonas* fermentation broth containing from about 3.0—6 weight percent biopolymer, the broth being substantially free of insoluble matter having a particle size greater than about 3 microns.

A method for the recovery of crude oil from an oil-bearing subterranean formation comprising injecting into the formation the diluted and sheared compositions named above is also a part of this invention.

Detailed description of the invention

The biopolymers suitable in the present invention are those produced by fermentation of members of the genus *Xanthomonas*, in particular *Xanthomonas campestris*, although numerous other species can be employed. Such biopolymers are well known and the literature abounds with their method of preparation. Of particular usefulness in this invention are the biopolymers produced by the processes of U.S. 4,119,546 and U.S. 4,282,321.

Methylene bis (thiocyanate) is a product of commerce and it is available from numerous commercial sources. Since MBT is an expensive chemical as well as a toxic one, both economic and environmental advantage is gained by using as little as possible as in the present invention. The formaldehyde employed as an optional ingredient in this invention can be any of a variety of ordinary commercial solutions.

In preparing the novel compositions of this invention MBT typically will be added directly to the fermentation tank containing the biopolymer while the mixer-agitator is operating. This material can then optionally be concentrated by a variety of methods including ultrafiltration (see U.S. 3,541,006 and U.S.

2

4,299,825 for example) and evaporation. Alternatively, the fermentation broth can be concentrated with subsequent addition of MBT. If ultrafiltration is used, a convenient method is to add MBT to the ultrafilter's recirculation tank near the end of the concentration cycle. This minimizes MBT loss in the ultrafiltrate. If the MBT treated broth does not have the viscosity characteristics desired for a particular use, it is often desirable to shear the composition in a homogenizer or colloid mill. This shear treatment results in a reduction in effective viscosity.

If formaldehyde is to be used, it will also be added at a later time. A period of at least about 3 hours should elapse before formaldehyde addition and up to 48 hours and even longer is possible. The product is then packaged directly for storage or shipment.

It has been found that the invention works well when fresh water or brines (including high salinity and high hardness brines) are used for dilution of admixtures containing broth and MBT with or without formaldehyde. It is necessary to subject the diluted composition to sufficient shear for a sufficient period of time to achieve uniform dispersion of the MBT-containing broth. In the laboratory the method of Waring Blender shear disclosed in U.S. 4,119,546 works well. For field use any of a number of commercial homogenizers or blenders can be used. Other additives commonly used in oil fields can also be added. These include oxygen scavengers, corrosion inhibitors etc. The additives should be chemically and physically compatible with the biopolymer so as not to impair injectivity.

The pH stability of MBT in *Xanthomonas campestris* fermentation broth was determined as follows. An unpreserved (no formaldehyde added) xanthan broth was prepared according to the method of U.S. Patent 4,119,546. MBT in the form of Busan 110 (Buckman Labs., Memphis, Tenn.) was added to pH pre-adjusted broth samples (NaOH, HCl or $H_2SO_4$ added for pH adjustment) to provide an active MBT concentration of 225 ppm. Initial readings were obtained as quickly as possible (60 mins) after treatment of broth. A test was also conducted in pure $H_2O$ with added Busan 110. Active MBT concentration was determined by Gas Chromatography after sample dilution with water, extraction with dichloromethane, extract concentration, drying, and dissolution in ethyl acetate. Pure MBT was used for internal multilevel standard calibration. Results are shown in Table I.

TABLE I

| Broth pH | Half life (hrs) |
|---|---|
| 4 | 5300 (approx.) |
| 5 | 1400 (approx.) |
| 6 | 500 (approx.) |
| 7 | 79 |
| 7.5 (water) | 23 |

These data clearly show the enhanced stability of MBT at lower pH.

The activity of MBT against cells of *Xanthomonas campestris* was tested at various pH levels in formaldehyde-free broth (see Table I). Broths were adjusted to various pH levels as indicated and turbidometric and microscopic examination was made to determine if cell lysis occurred. Results are shown in Table II as a function of MBT concentration and pH.

TABLE II

| Sample | pH | MBT Level (ppm) | Lysis @ 24 hrs. |
|--------|-----|-----|-----|
| Control | 5.1 | 0 | None |
| 1 | 4.0 | 8.0 | None |
| 2 | 4.0 | 16.0 | None |
| 3 | 5.2 | 8.0 | + ++ |
| 4 | 5.2 | 16.0 | ++ |
| 5 | 6.0 | 8.0 | ++ +++ |
| 6 | 6.0 | 16.0 | ++ |
| 7 | 7.0 | 8.0 | +++ ++++ |
| 8 | 6.9 | 16.0 | ++++ |

These results show that MBT induced cell lysis occurs more rapidly as pH increases.

Filterability is a highly useful gauge of how well the biopolymer composition will perform under oil field conditions. The Millipore filterability test is an experimental procedure that measures flow rate through a Millipore filter (0.45 to 5.0 µm pore size) as a function of volume under a constant pressure of 40 psig (3.75 bar). The filter ratio is the ratio of the time to collect the fourth 250 ml of mobility control solution to the time to collect the first 250 ml of mobility control solution. A filter ratio of 1.0 indicates that the solution has no plugging tendencies. An acceptable mobility control solution has a filter ratio of 1 to 3 (0.45 to 5 µm Millipore filter), preferably ⩽1.7.

The desired filter ratio and Millipore filter size for testing of a particular mobility control solution are dependent on the permeability of the subterranean stratum of the oil field for which oil displacement is planned.

An alternative test involves the prefiltration of at least 1 liter of mobility control solution at 1450 ppm of biopolymer concentration through a 5 µm Millipore filter followed by a second filtration at a 40 psig (3.75 bar) pressure drop across a 1.2 micron Versapore filter. The number of milliliters of solution passing through the 1.2 µm filter in 600 seconds or less is taken as a measure of injectivity.

The examples to follow are illustrative and do not limit the scope of the claims.

Example 1

A standard untreated xanthan broth was prepared according to the method of U.S. Patent 4,119,546. Broth viscosity assay gave 4.5% activity in the broth. 150 g samples of broth were taken. One was treated with 200 ppm MBT (active) and the other was untreated. After 2 days samples were diluted in a high hardness test brine and were tested for Versapore 1.2 µm filterability after 5.0 µm Millipore prefiltration. Results are shown below.

| Sample | Versapore filter- ability (ml/sec) |
|--------|-----|
| Untreated | 250 ml/600 sec |
| With 200 ppm MBT | 1000 ml/119 sec |

This demonstrates the dramatic enhancement of MBT on xanthan broth filterability.

Example 2

Samples of 150 g each were prepared from the untreated broth over a range of pH and MBT concentrations and compared with formaldehyde controls (3000 ppm formaldehyde) after 2 days. Results for diluted and sheared broths (1450 ppm biopolymer) are shown below. HCl or NaOH were used for pH adjustment under rapid mixing conditions. The data indicate the number of mls which passed through the 1.2 µm rated Versapore filter and the number of seconds tested. Tests were stopped at 600 seconds or 1000 ml, whichever came first.

4

| pH | Control formaldehyde only | MBT conc. (ppm) | | | | | | | |
|---|---|---|---|---|---|---|---|---|---|
| | | 4 | 8 | 16 | 32 | 64 | 128 | 256 | 512 |
| 3.5 | 330/600 | | | | 422/600 | | 510/600 | | 610/600 |
| 5.0 | 325/600 | | | 335/600 | | 375/600 | | 1000/107 | |
| 6.5 | 340/600 | 313/600 | | 528/600 | | | 1000/131 | | |
| 8.5 | 335/600 | | 450/600 | | 365/600 | | 1000/151 | | 1000/103 |

The results clearly show the superior filterability obtained using higher concentrations of MBT and pH levels above 3.5. However, it is clear that even at the low pH levels, filterability improves.

Example 3

To test the effect of MBT on injectivity of diluted xanthan broth, a series of 12 fermentations were performed according to conditions of U.S. Patent 4,119,546 in 4 liter jar fermentors and 5.0 μm Millipore filtration tests and turbidity measurements were made. Three broths were split to receive formaldehyde additions at 3000 ppm in one aliquot and MBT additions at 167 ppm in the other aliquot. All other broths received 167 ppm MBT. Results are given below.

Test conditions: Std. 5 micron filtration in Test Brine with 70 ppm Triton X-100, 500 ppm concentration xanthan

| | | | 5 μm Filtration data turbidity | | | |
|---|---|---|---|---|---|---|
| Sample | Stabilizer | % Xanthan | NTU[1] | pH | F.R.[2] | F.t.[3] (sec) |
| 1 | MBT | 4.59 | 7 | 7.2 | 1.2 | 22.4 |
| 2 | MBT | 4.53 | 7 | 7.2 | 1.3 | 23.7 |
| 3a | MBT | 4.41 | 6 | 7.1 | 1.2 | 19.5 |
| 3b | F[4] | 4.41 | 20 | 5.9 | 240 ml/600 sec | |
| 4 | MBT | 4.41 | 8 | 7.1 | 1.3 | 12.3 |
| 5a | MBT | 3.13 | 10 | 7.2 | 1.6 | 25.4 |
| 5b | F | 3.13 | 25 | 6.3 | 1.5 | 41.1 |
| 6 | MBT | 4.53 | 8 | 7.1 | 2.2 | 41.0 |
| 7a | MBT | 2.85 | 11 | 7.2 | 1.8 | 23.2 |
| 7b | F | 2.85 | 28 | 6.2 | 220 ml/600 sec | |
| 8 | MBT | 4.44 | 6 | 7.1 | 1.1 | 19.0 |
| 9 | MBT | 4.47 | 8 | 7.1 | 1.3 | 21.3 |
| 10 | MBT | 4.28 | 6 | 7.2 | 1.1 | 21.2 |
| 11 | MBT | 4.28 | 10 | 7.1 | 1.3 | 20.6 |
| 12 | MBT | 4.18 | 14 | 7.2 | 1.2 | 22.9 |

[1] Nephelometric Turbidity Units, HACH Model 2100A.
[2] Filter ratio through 5.0 μm Millipore filter.
[3] Filtration time in seconds for filtration of 1000 mls solution.
[4] Formaldehyde.

These results clearly show that MBT improves the 5.0 μm filterability and reduces the turbidity of diluted Xanthan broths when compared to use of formaldehyde alone. Microscopic examination of samples confirmed cellular destruction and reduced particle size.

Example 4

Example 3 was repeated using broths from standard production lots and performing sequential 5.0 μm Millipore filtration and 1.2 μm Versapore filtration. Results are shown below.

6

Xanthan conc.=1000 ppm, no Triton used

| Sample | Stabilizer | Conc. | NTU(BF)[1] | 5 Filtration data | | 1.2 µ Versapore | | NTU(AF)[2] |
|---|---|---|---|---|---|---|---|---|
| | | | | F.R. | F.t. | F.R. | F.t. | |
| 1 | MBT | 200 | 66.5 | 1.85 | 20 | 1.28 | 34 | 60 |
| 2 | F | 5500 | 75.0 | 740 ml/600 sec | | 1.90 | 64 | 60 |
| 3 | MBT | 200 | 35.0 | 2.30 | 30 | 8.02 | 287 | 30 |
| 4 | F | 4190 | 68.0 | 6.75 | 76 | 590 ml/600 sec | | 34 |

[1] Before filtration.
[2] After filtration.

Filterability improved with both broths. Sample 1 improved from a plugging condition to a filterable status through a 5.0 filter and Sample 3 did the same at 1.2 µm after improving in filter ratio (F.R.) at 5.0.

Example 5

Sample 3 of Example 4 was further tested, based on limited stability of MBT and the need for broad-spectrum biocidal effectiveness for broth preservation, by adding formaldehyde after MBT addition. Results are shown below.

| Sample | MBT (ppm) | Formaldehyde (ppm) | t (hrs) | NTU (BF) | 5 µm Millipore* | | 1.2 µm Millipore | | NTU (AF) |
|---|---|---|---|---|---|---|---|---|---|
| | | | | | FR | Ft | FR | Ft | |
| 1 | 0 | 3000 | — | 63 | 3.08 | 89 | 420 ml/600 sec | | 49 |
| 2 | 160 | 3000 | 0 | 59 | 4.51 | 64 | 430 ml/600 sec | | 49 |
| 3 | 160 | 0 | — | 34 | 2.34 | 32 | 7.42 | 253 | 33 |
| 4 | 0 | 3000 | — | 60 | 4.36 | 88 | 360 ml/600 sec | | 47 |
| 5 | 160 | 3000 | 1 | 52 | 3.53 | 52 | 340 ml/600 sec | | 41 |
| 6 | 160 | 0 | — | 33 | 2.94 | 35 | 7.98 | 230 | 26 |
| 7 | 0 | 3000 | — | 62 | 4.52 | 89 | 280 ml/600 sec | | 45 |
| 8 | 160 | 3000 | 3 | 49 | 5.07 | 75 | 380 ml/600 sec | | 39 |
| 9 | 160 | 0 | — | 27 | 2.96 | 54 | 870 ml/600 sec | | 23 |
| 10 | 160 | 3000 | 48 | 30 | 1.69 | 30 | 3.92 | 136 | 27 |
| 11 | 160 | 0 | — | 34 | 2.34 | 32 | 7.42 | 253 | 33 |

* After 48 hour hold time.

Here formaldehyde was added immediately after MBT addition (t=0) and 1 hr, 3 hrs and 48 hrs after MBT addition. The results show a noticeable inhibition of MBT effectiveness by formaldehyde if the latter is added too soon after MBT addition. More than 3 hrs should elapse before formaldehyde addition. The 48 hr results clearly show that the sequential use of MBT and formaldehyde is feasible and also indicate a further improvement in filterability when formaldehyde is added at least 3 hrs after MBT addition.

Example 6

Xanthan broth 2.51% assay was tested for the filterability as a function of formaldehyde addition time after MBT addition. Results are shown below for 500 ppm biopolymer concentration in test brine.

| MBT Concentration | Time before HCHO addition | HCHO Level | Viscosity[4] (cps)(mPas) | NTU (BF) | pH | 5 µm Millipore | | 1.2 µm Millipore | | NTU (AF) |
|---|---|---|---|---|---|---|---|---|---|---|
| | | | | | | FR | Ft 1000 (sec) | F.R. | F.t. | |
| 168 ppm | — | — | 28.7 | 42.0 | 7.1 | 2.8 | 38 | 1.74 | 49 sec | 36.0 |
| None | 0 hr | 3,000 ppm | 30.5 | 74.0 | 7.0 | 74.2 | 476 | 240 ml/600 sec | | 49.0 |
| 168 | 3 hrs | 3,000 ppm | 30.3 | 34.0 | 7.0 | 3.2 | 35 | 2.17 | 58 sec | 29.0 |
| 168 | 8 hrs | 3,000 ppm | 30.0 | 47.5 | 7.2 | 3.3 | 35 | 2.09 | 62 sec | 37.0 |
| 168 | 1 day | 3,000 ppm | 28.2 | 41.0 | 7.2 | 2.7 | 32 | 1.74 | 49 sec | 33.0 |
| 168 | 2 days | 3,000 ppm | 29.7 | 44.0 | 7.0 | 3.0 | 41 | 1.84 | 58 sec | 32.5 |
| 168 | 4 days | 3,000 ppm | 29.0 | 45.0 | 7.0 | 5.2 | 50 | 1.59 | 51 sec | 41.0 |
| 168 | 7 days | 3,000 ppm | 29.0 | 42.0 | 7.0 | 2.0 | 38 | 1.43 | 53 sec | 35.0 |
| Dimethyl-formamide[1] | 0 hr | — | 32.3 | 55.0 | 7.0 | 41.0 | 474 | 220 ml/600 sec | | 39.0 |
| 1/3 Dimethyl-formamide[2] | 0 hr | — | 33.4 | 52.0 | 7.0 | 870 ml/600 sec | | 210 ml/600 sec | | 37.5 |
| 168 ppm MBT WF[3] | 0 hr | — | 32.7 | 27.0 | 7.0 | 4.7 | 105 | 840 ml/600 sec | | 22.0 |

[1] Unstabilized FLOCON 4800 Broth Containing 1,680 ppm dimethylformamide (DMF).
[2] Ibid, 560 ppm DMF.
[3] Water Formulated MBT Biocide.
[4] Viscosity at 6 R.P.M. on Brookfield Viscometer using UL adapter. (Centipoise).

These results indicate that formaldehyde can be added at 3 hrs or thereafter and the MBT effect will be evident. They also show that formulation of MBT in water rather than dimethylformamide and aromatic hydrocarbon (as in Busan 110) also improves filterability at 5 μm and 1.2 μm.

Example 7

A standard xanthan broth was treated with MBT at various levels and sampled for biocidal effectiveness by plating on YM agar plates and by subculture (1 ml into 50 ml sterile trypticase soy broth). Flasks and plates were incubated at 28—30°C. Flasks were held on a rotary shaker for 7 days and examined for turbidity. Plates were similarly checked for colony development. Results are shown below.

| Biocide | Level (ppm) | Subculture data (days) | | | | |
|---|---|---|---|---|---|---|
| | | 0 | 1 | 2 | 4 | 7 |
| None | — | + | + | + | + | + |
| Formaldehyde | 2000 | − | − | − | − | − |
| MBT | 167 | − | − | − | − | − |
| MBT | 501 | − | − | − | − | − |

The experiment was repeated and extended to longer times and to cover lower MBT concentrations. Results are found below.

| Biocide | Level (ppm) | Subculture data (Xanthomonas growth) (Days) | | | | | (Months) | | |
|---|---|---|---|---|---|---|---|---|---|
| | | 0 | 1 | 2 | 3 | 7 | 1 | 2 | 3 |
| None | — | + | + | + | + | + | + | + | + |
| Formaldehyde | 2000 | ± | ± | ± | − | − | − | − | − |
| MBT | 167 | − | − | − | − | − | − | − | − |
| | 134 | − | − | − | − | − | − | − | − |
| | 101 | − | − | − | − | − | − | − | − |
| | 68 | − | − | − | − | − | − | − | − |
| | 35 | − | − | − | − | − | − | − | − |

Example 8

The effect of pH on MBT biocidal effectiveness against *X. campestris* was checked at pH 5, 6 and 7. Results are shown below.

| Biocide | Level (ppm) | pH | Subculture data (Xanthomonas growth) |
|---|---|---|---|
| None | — | 5 | + |
| Formaldehyde | 3000 | 5 | — |
| MBT | 167 | 5 | — |
| None | — | 6 | + |
| Formaldehyde | 3000 | 6 | — |
| MBT | 167 | 6 | — |
| None | — | 7 | + |
| Formaldehyde | 3000 | 7 | — |
| MBT | 167 | 7 | — |

Example 9

The effect of shearing on effective viscosity was tested and is shown below. Two laboratory prepared Xanthomonas broths were employed. Samples of about 5 gallons were sheared in a Manton-Gaulin Homogenizer Model 15M at the operating pressures shown and the increased filter ratios obtained in the sheared samples are evident.

| Sample | Shear PSI | MBT | Xanthan assay | 1.2 µm Millipore | |
|---|---|---|---|---|---|
| | | | | FR | FT |
| 1 (control) | — | 200 ppm | 3.53% | 340 cc | 600 sec |
| 1 (shear) | 250 | 200 ppm | 3.17% | 690 cc | 600 sec |
| 2 (control) | — | 168 ppm | 3.22% | 95 cc | 600 sec |
| 2 (shear) | 250 | 168 ppm | 3.0% | 580 cc | 600 sec |

Example 10

Another laboratory prepared xanthan broth was treated with 167 ppm MBT and was divided into 5, five gallon portions for an evaluation of the effect of shear on effective viscosity. The model 15M Manton-Gaulin Homogenizer was used. The results were as follows:

| Shear PSI | Xanthan assay | 1.2 µm Millipore | |
|---|---|---|---|
| | | FR | FT |
| — | 3.2% | 403 cc | 600 sec |
| 100 | 3.1% | 595 cc | 600 sec |
| 200 | 3.0% | 910 cc | 600 sec |
| 250 | 2.9% | 1000 cc | 332 sec |
| 300 | 2.5% | 1000 cc | 135 sec |

**Claims**

1. A composition for use in enhanced oil recovery comprising from 3.0—18 weight percent *Xanthomonas* biopolymer in the form of whole *Xanthomonas* fermentation broth or concentrated *Xanthomonas* fermentation broth and from 0.0128—0.0512 weight percent methylene bis (thiocyanate), said composition having a pH above 5.0.

2. The composition of claim 1 wherein said biopolymer is in the form of whole *Xanthomonas* fermentation broth containing from 3.0—6 weight percent biopolymer, said broth being substantially free of insoluble matter having a particle size greater than about 3 µm.

3. The composition of claim 1 which also contains from 300—5000 ppm formaldehyde, said amount of formaldehyde added after lysis of *Xanthomonas* cells by methylene bis (thiocyanate).

4. The composition of claim 1 prepared by subjecting said composition to shear sufficient to cause a reduction in viscosity effectiveness of said biopolymer of from about 5—30 percent.

5. A process to produce directly injectable *Xanthomonas* biopolymer solution comprising the steps of:
   1) admixing *Xanthomonas* biopolymer fermentation broth or concentrated fermentation broth containing from 3.0—18 weight percent *Xanthomonas* biopolymer, with methylene bis (thiocyanate) to a final concentration of methylene bis (thiocyanate) of from 0.0128—0.0512 weight percent in the admixture, said admixture having a pH above 5.0;
   2) after a period of at least about 3 hours, admixing said admixture with from 300—5000 ppm formaldehyde; and
   3) diluting said second admixture to a concentration of from 100—4000 ppm biopolymer in a vigorous shear field.

6. A method for the recovery of crude oil from an oil-bearing subterranean formation comprising injecting into the formation the composition of claim 1 diluted to a concentration of from about 100—4000 ppm biopolymer in a vigorous shear field.

**Patentansprüche**

1. Zusammensetzung zur Verwendung bei gesteigerter Ölgewinnung umfassend 3,0 bis 18 Gew.% Xanthomonas-Biopolymer in Form der gesamten Xanthomonas-Fermentationsbrühe oder einer konzentrierten Xanthomonas-Fermentationsbrühe und 0,0128 bis 0,0512 Gew.% Methylenbis(thiocyanat), welche Zusammensetzung einen pH oberhalb 5,0 aufweist.

2. Zusammensetzung nach Anspruch 1, worin das Biopolymer in Form der gesamten Xanthomonas-Fermentationsbrühe mit einem Gehalt von 3,0 bis 6 Gew.% Biopolymer ist, wobei diese Brühe im wesentlichen frei von unlöslichem Material mit einer Teilchengröße von höher als etwa 3 µm ist.

3. Zusammensetzung nach Anspruch 1, die auch 300 bis 5000 ppm Formaldehyd enthält, welcher Formaldehydanteil nach Lyse von Xanthomonaszellen durch Methylenbis(thiocyanat) zugesetzt wurde.

4. Zusammensetzung nach Anspruch 1, hergestellt, indem diese Zusammensetzung ausreichender Scherung unterworfen wurde, um eine Verminderung der Viskositätswirksamkeit des genannten Biopolymers von etwa 5 bis 30% zu bewirken.

5. Verfahren zum Herstellen einer direkt einspritzbaren Xanthomonasbiopolymerlösung umfassend die Schritte
   1) des Mischens einer Xanthomonas-Biopolymerfermentationsbrühe oder einer konzentrierten Fermentationsbrühe enthaltend 3,0 bis 18 Gew.% Xanthomonas-Biopolymer mit Methylenbis(thiocyanat) auf eine Endkonzentration des Methylenbis(thiocyanats) von 0,0128 bis 0,0512 Gew.% in der Mischung, welche Mischung einen pH oberhalb 5,0 aufweist,
   2) des Mischens dieser Mischung mit 300 bis 5000 ppm Formaldehyd nach einem Zeitraum von mindestens etwa 3 Stunden und
   3) des Verdünnens dieser zweiten Mischung auf eine Konzentration von 100 bis 4000 ppm Biopolymer in einem starken Scherfeld.

6. Verfahren zum Gewinnen von Rohöl aus einer ölhaltigen unterirdischen Formation umfassend das Einspritzen der Zusammensetzung nach Anspruch 1, verdünnt auf eine Konzentration von etwa 100 bis 4000 ppm Biopolymer in einem starken Scherfeld, in die Formation.

**Revendications**

1. Composition destinée à être utilisée dans la récupération accrue de pétrole, comprenant 3,0 à 18% en poids de biopolymère de *Xanthomonas* sous forme de bouillon entier de fermentation de *Xanthomonas* ou de bouillon concentré de fermentation de *Xanthomonas*, et 0,0128 à 0,0512% en poids de méthylène-bis(thiocyanate), ladite composition ayant un pH supérieur à 5,0.

2. Composition suivant la revendication 1, dans laquelle le biopolymère est sous forme de bouillon entier de fermentation de *Xanthomonas* contenant 3,0 à 6% en poids de biopolymère, ledit bouillon étant pratiquement dépourvu de matière insoluble ayant un diamètre de particules supérieur à environ 3 µm.

3. Composition suivant la revendication 1, qui comprend également 300 à 5000 ppm de formaldéhyde, ladite quantité de formaldéhyde étant ajoutée après la lyse des cellules de *Xanthomonas* par le méthylènebis(thiocyanate).

4. Composition suivant la revendication 1, préparée en soumettant ladite composition à un cisaillement suffisant pour provoquer une diminution d'environ 5 à 30% de la viscosité efficace du biopolymère.

5. Procédé de production d'une solution de biopolymère de *Xanthomonas* directement injectable, comprenant les étapes consistant:

1) à mélanger du bouillon de fermentation ou du bouillon de fermentation concentré de biopolymère de *Xanthomonas*, contenant 3,0 à 18% en poids de biopolymère de *Xanthomonas*, à du méthylène-bis(thiocyanate) à une concentration finale en méthylène-bis(thiocyanate) de 0,0128 à 0,0512% en poids dans le mélange, ledit mélange ayant un pH supérieur à 5,0;

2) après un temps d'au moins environ 3 heures, à ajouter audit mélange 300 à 5000 ppm de formaldéhyde; et

3) à diluer ledit second mélange à une concentration de 100 à 4000 ppm en biopolymère dans un champ de cisaillement énergique.

6. Procédé de récupération de pétrole brut dans une formation pétrolifère souterraine, consistant à injecter dans la formation la composition suivant la revendication 1, diluée à une concentration d'environ 100 à 4000 ppm en biopolymère dans un champ de cisaillement énergique.